(19) Europäisches Patentamt
European Patent Office
Office européen des brevets

(11) **EP 2 348 627 A1**

(12) **EUROPÄISCHE PATENTANMELDUNG**

(43) Veröffentlichungstag:
**27.07.2011 Patentblatt 2011/30**

(51) Int Cl.:
***H02M 7/487*** (2007.01)     *H02M 1/14* (2006.01)

(21) Anmeldenummer: **10151549.2**

(22) Anmeldetag: **25.01.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(71) Anmelder: **ABB Research Ltd.**
**8050 Zürich (CH)**

(72) Erfinder:
• **Kieferndorf, Frederick**
**5442, Fislisbach (CH)**

• **Papafotiou, Georgios**
**8134, Adliswil (CH)**
• **Oikonomou, Nikolaos**
**CH-5404, Baden (CH)**
• **Geyer, Tobias**
**1052, Auckland (NZ)**

(74) Vertreter: **ABB Patent Attorneys**
**C/o ABB Schweiz AG**
**Intellectual Property (CH-LC/IP)**
**Brown Boveri Strasse 6**
**5400 Baden (CH)**

(54) **Wandlerschaltung sowie Verfahren zum Betreiben einer mehrstufigen Wandlerschaltung**

(57)     Die Erfindung betrifft ein Verfahren zum Betreiben einer mehrphasigen, mehrstufigen Wandlerschaltung (3), insbesondere zum Betreiben einer mehrphasigen elektrischen Maschine (2) oder eines Gleichrichters, wobei die Wandlerschaltung (3) abhängig von internen Schaltzuständen mehrere Anschlussspannungen ($U_{P1}$, $U_{P2}$, $U_{P3}$) bereitstellt und ausgebildet ist, dass ein interner Zustand der Wandlerschaltung von einem Schaltzustand abhängt, mit folgenden Schritten:

a) Bereitstellen einer zeitlichen Abfolge von Phasenspannungsvektoren gemäß einer vorgegebenen Optimierungsfunktion für einen momentanen Zeitpunkt, wobei die Phasenspannungsvektoren der Abfolge jeweils für ein bestimmtes Zeitfenster die mehreren von der Wandlerschaltung bereitzustellenden Anschlussspannungen ($U_{P1}$, $U_{P2}$, $U_{P3}$) angeben,

b) Ermitteln für mindestens einen der Phasenspannungsvektoren der Abfolge der Phasenspannungsvektoren eine Menge von einem oder mehreren redundanten Phasenspannungsvektoren, die die gleichen Spannungsdifferenzen zwischen den einzelnen Phasen aufweisen wie der mindestens eine Phasenspannungsvektor der Abfolge der Phasenspannungsvektoren, so dass sich mehrere redundante Abfolgen von Phasenspannungsvektoren ergeben, bei denen der mindestens eine der Phasenspannungsvektoren der Abfolge der Phasenspannungsvektoren durch einen der redundanten Phasenspannungsvektoren ersetzt ist;

c) Auswählen von einer der redundanten Abfolgen von Phasenspannungsvektoren gemäß einer weiteren vorgegebenen Optimierungsfunktion zum Optimieren des internen Zustands der Wandlerschaltung gemäß einem vorgegebenen Optimierungsziel;

d) Ansteuern der Wandlerschaltung (3) zur Ausgabe von mindestens des ersten Phasenspannungsvektors der ausgewählten Abfolge von Phasenspannungsvektoren.

Fig. 1

## Beschreibung

### Technisches Gebiet

Die Erfindung betrifft im Allgemeinen eine Wandleranordnung mit einem mehrstufigen Wandler zum Ansteuern von mehrphasigen Antrieben, insbesondere von Asynchronmaschinen, Synchronmaschinen und dergleichen. Die Erfindung betrifft weiterhin Verfahren zum Betreiben einer derartigen Wandlerschaltung.

### Stand der Technik

Zur Ansteuerung von mehrphasigen elektrisch kommutierten elektrischen Maschinen werden in der Regel mehrstufige Wandlerschaltungen vorgesehen. Die mehrstufigen Wandlerschaltungen umfassen in der Regel für jede Phase eine Wandlereinheit. Die Wandlereinheiten weisen jeweils mehrere Schaltelemente, insbesondere Leistungshalbleiterschalter, auf, die je nach momentanen Phasenspannungen bzw. Anschlussspannungen, die an eine angeschlossene elektrische Maschine ausgegeben werden sollen, gemäß einem bestimmten Schaltmuster für die Ansteuerung jedes der Schaltelemente angesteuert werden. Die Schaltmuster werden beispielsweise gemäß einen Konzept von optimierten Pulsmustern (OPP: optimized pulse pattern) ermittelt. Die optimierten Pulsmuster geben abhängig von dem momentanen Betriebszustand Phasenspannungspegel für jeden Ausgang der Wandlerschaltung für ein sich an den momentanen Zeitpunkt anschließendes Zeitfenster an, um einen gewünschten Verlauf der Ströme durch die Ausgänge der Wandleranordnung zu erreichen.

Die optimierten Pulsmuster werden so bestimmt, dass sie ein bestimmtes Optimierungsziel bei dem Betrieb der elektrischen Maschine erfüllen. Mögliche Optimierungsziele können beispielsweise die Eliminierung von bestimmten Oberschwingungen, die Minimierung des gesamten Oberschwingungsgehalts, die Minimierung eines Motorstroms bei vorgegebener Drehzahl der elektrischen Maschine und dergleichen sein.

Bei über eine Versorgungsgleichspannung versorgten, mehrstufigen Wandlerschaltungen werden in der Regel interne Zwischenspannungen generiert, die bei Bedarf den extern angelegten Versorgungspotenzialen hinzu addiert oder subtrahiert werden, um einen zwischen den Versorgungspotenzialen liegenden Phasenspannungspegel (Potenzial) zu erhalten. Konstruktionsbedingt können diese Phasenspannungen bei derartigen Wandlerschaltungen durch verschiedene Schaltzustände erreicht werden (Einzelphasenredundanzen), die Zwischenkreispotenziale und/oder Kondensatorspannungen über interne Kondensatoren der Wandlerschaltungen in unterschiedlicher Weise belasten.

Wenn die optimierten Pulsmuster für den Betrieb der mehrstufigen Wandlerschaltung vorgesehen sind, besteht ein Problem darin, aus den durch die optimierten Pulsmuster bestimmten Phasenspannungen die tatsächlichen Schaltzustände für die Schaltelemente der Wandlerschaltung festzulegen, so dass zum einen die erforderlichen Phasenspannungen bereitgestellt werden und zum anderen die internen Zwischenkreispotenziale und - spannungen der Wandlerschaltung näherungsweise konstant oder innerhalb vorbestimmter Grenzen gehalten werden. Mit anderen Worten müssen bei der Ansteuerung des mehrstufigen Wandlers einerseits die oben beschriebenen Optimierungsziele erreicht werden und andererseits die internen Zwischenkreispotenziale und -spannungen näherungsweise konstant bzw. innerhalb der vorgegebenen Grenzen gehalten werden.

Bisherige Lösungen zum Einstellen der internen Zwischenkreispotentiale und -spannungen in einer Wandlerschaltung beruhen auf der Nutzung dieser Einzelphasenredundanzen, die in der Regel durch Anwendung einer hysteresebasierten Steuerung bzw. Regelung durchgeführt werden. Das bedeutet, dass, wenn beispielsweise ein Zwischenkreispotenzial oder eine Spannung über einer schwebenden Kapazität einen bestimmten Grenzwert erreicht, eine entsprechende Regelung zwischen den entsprechenden Einzelphasenredundanzen umschaltet, um die Spannung in die gewünschte Richtung zu treiben. Mit anderen Worten werden negative und positive Kondensatorströme in geeigneter Weise hervorgerufen, so dass sich die Ladungsflüsse zu und von dem Kondensator ausgleichen (siehe J. Pou, R. Pinando et al.," Evaluation of the Low-Frequency Neutral-Point Voltage Oscillations in the Three-Level Inverter", IEEE Transactions on Industrial Electronics, Band 52, Nr. 6, Dezember 20054, Seiten 1582-1588). Hinsichtlich des Ausgleichens eines Potenzials eines neutralen Knotens bei der Verwendung von optimierten Pulsmustern für dreistufige Wandlerschaltungen müssen daher die Pulsmuster modifiziert werden, wenn eine Potenzialabweichung an dem neutralen Knoten auftritt. Gemäß diesem Verfahren wird einer der durch das optimierte Pulsmuster vorgegebenen Schaltzustände durch sein redundantes Äquivalent ausgetauscht. Dieses Verfahren kann dazu führen, dass mehrere Schaltvorgänge zwischen zwei aufeinanderfolgenden Schaltzuständen notwendig sind. Dadurch kann sich die Schaltfrequenz erhöhen, da den durch das Pulsmuster vorgegebenen Schaltzuständen zusätzliche Schaltvorgänge hinzugefügt werden. Dies kann wiederum die Schaltverluste und/oder die Schaltfrequenz erhöhen, was für Wandlerschaltungen z.B. mit Hochleistungsinvertern unerwünscht ist.

Ein in der Druckschrift J. Steinke, "Switching Frequency Optimal PWM Control of a Three-Level Inverter", IEEE Transactions on Power Electronics, Band 7, Nr. 3, Januar 1992, Seiten 487-496 beschriebenes, zweites Verfahren zur Regelung der Potenzialabweichung an einem neutralen Knoten besteht darin, eine Nullfolgen-Spannungskomponente (zero sequence voltage) abhängig von der Richtung des Stroms in den bzw. von dem neutralen Knoten entweder den Phasenbezugsspannungen hinzuzufügen oder davon zu subtrahieren. Der Strom an dem neutralen Knoten wird dadurch falls notwendig invertiert, wobei zusätzliche Schaltvorgänge auftreten können. Das Verfahren wurde für kleine Potentialabweichungen an dem neutralen Knoten überprüft, wo es gute Ergebnisse gezeigt hat. Das Erfassen der Richtung des Stroms an dem neutralen Knoten hat sich jedoch als problematisch herausgestellt, wenn hohe Verzerrungen des Stroms bei niedrigen Schaltfrequenzen auftreten.

Gemäß einem weiteren Verfahren, das in der Druckschrift F. Fang, "Multilevel PWM VSIs - Coordinated Control of Regenerative Three-Level Neutral Point Clamped Pulsewidth-Modulated Voltage Source Inverters", IEEE Industry Applications Magazine, July/August 2004, Seiten 51 bis 58, offenbart ist, werden die Einschaltzeiten eines Paares von redundanten Schaltzustandsvektoren gesteuert. Beispielsweise ist eine Spannungsvektorabfolge mit Vektoren, die das Potential an dem neutralen Knoten in unterschiedliche Richtungen ändern, vorgegeben. Ein Modifizieren der Einschaltzeit lässt die zugrundeliegende Voltsekunde des vollständigen Zyklus unverändert, was wichtig ist, um die korrekte Amplitude der zugrundeliegenden Komponente des Ausgangs beizubehalten, während eine Änderung des Potentials des neutralen Knotens erreicht, die proportional zu der Veränderung der Einschaltzeiten ist. Dadurch wird das gewünschte Einstellen des Potenzials an dem neutralen Knoten erreicht. In diesem Fall wird jedoch die Verzerrung durch Oberschwingungen des Motorstroms insgesamt größer für die modifizierte Spannungsvektorabfolge. Daher führt das tatsächliche angelegte Schaltmuster, obwohl keine zusätzlichen Schaltvorgänge hinzugefügt werden, zu einem erhöhten Oberschwingungsgehalt des Stroms.

Darüber hinaus kann je nach Betriebszustand der elektrischen Maschine bzw. einer durch ein optimiertes Pulsmuster vorgegebener Verlauf der Phasenspannungen die durch die Redundanz vorgegebenen möglichen Schaltzustände zum Einstellen der Phasenspannungen durch verschiedene Schaltmuster unter Umständen nicht ausreichend sein, um das Zwischenkreispotenzial an dem neutralen Punkt in der Wandlerschaltung in optimaler Weise konstant zu halten bzw. auf ein vorbestimmtes Potential zu regeln. Dies kann unter Umständen dazu führen, dass sich die internen Spannungen, wie beispielsweise Zwischenkreispotentiale und Kondensatorspannungen, von dem Sollwert wegbewegen, was zu einem gestörten Betrieb der elektrischen Maschine und insbesondere zur Erzeugung von unerwünschten Oberschwingungen führt. Weiterhin kann sich als Folge eines schwankenden Zwischenkreispotentials die Spannungsbelastung der Schaltelemente erhöhen und die Zwischenkreiskapazitäten beschädigt werden.

Erhöht man die Zahl der Pegel der Wandlerschaltung, so können sich oben genannte Effekte verstärken. Es ist daher wünschenswert, eine Wandlerschaltung und ein Verfahren zum Betreiben einer solchen Wandlerschaltung zur Verfügung zu stellen, bei dem die Abweichungen von internen Potenzialen und Spannungen ausgeglichen werden können, ohne zusätzliche Schaltvorgänge, die die Schaltverluste erhöhen, hervorzurufen und/oder ohne den Grad der Verzerrung durch Oberschwingungen zu erhöhen.

## Darstellung der Erfindung

Es ist Aufgabe der vorliegenden Erfindung, ein Verfahren zum Betreiben eines mehrstufigen Wandlers zum Ansteuern einer elektrischen Maschine zur Verfügung zu stellen, mit dem es möglich ist, bei verschiedenen Betriebszuständen des Motorsystems zuverlässiger ein Konstanthalten bzw. Einstellen von internen Spannungen und Potentialen der Wandlerschaltung zu gewährleisten.

Diese Aufgabe wird durch das Verfahren zum Betreiben einer mehrphasigen, mehrstufigen Wandlerschaltung gemäß Anspruch 1 sowie durch die Wandleranordnung, das Motorsystem und den Gleichrichter gemäß den nebengeordneten Ansprüchen gelöst.

Weitere vorteilhafte Ausgestaltungen sind in den abhängigen Ansprüchen angegeben. Gemäß einem ersten Aspekt ist ein Verfahren zum Betreiben einer mehrphasigen, mehrstufigen Wandlerschaltung, insbesondere zum Betreiben einer mehrphasigen elektrischen Maschine oder eines Gleichrichters vorgesehen, wobei die Wandlerschaltung abhängig von internen Schaltzuständen mehrere Anschlussspannungen bereitstellt und ausgebildet ist, dass ein interner Zustand der Wandlerschaltung von einem Schaltzustand abhängt. Das Verfahren umfasst die folgenden Schritte:

a) Bereitstellen einer zeitlichen Abfolge von Phasenspannungsvektoren gemäß einer Optimierungsfunktion für einen momentanen Zeitpunkt, wobei die Phasenspannungsvektoren der Abfolge jeweils für ein bestimmtes Zeitfenster die mehreren von der Wandlerschaltung bereitzustellenden Anschlussspannungen angeben,

b) Ermitteln für mindestens einen der Phasenspannungsvektoren der Abfolge der Phasenspannungsvektoren eine Menge von einem oder mehreren redundanten Phasenspannungsvektoren, die die gleichen Spannungsdifferenzen zwischen den einzelnen Phasen aufweisen wie der mindestens eine Phasenspannungsvektor der Abfolge der Phasenspannungsvektoren, so dass sich mehrere redundante Abfolgen von Phasenspannungsvektoren ergeben, bei denen der mindestens eine der Phasenspannungsvektoren der Abfolge der Phasenspannungsvektoren durch einen der redundanten Phasenspannungsvektoren ersetzt ist;

c) Auswählen von einer der redundanten Abfolgen von Phasenspannungsvektoren gemäß einer weiteren Optimierungsfunktion zum Optimieren des internen Zustands der Wandlerschaltung gemäß einem vorgegebenen Optimierungsziel; und

d) Bereitstellen von mindestens des ersten Phasenspannungsvektors der ausgewählten Abfolge von Phasenspannungsvektoren zum Ansteuern der Wandlerschaltung.

Eine Idee des obigen Verfahrens besteht darin, tatsächlich auszugebende Anschlussspannungen unter Inkaufnahme von Schwankungen der Gleichtaktspannung bei Vorgabe einer gemäß einer Optimierungsfunktion bereitgestellten Abfolge von Phasenspannungsvektoren zu bestimmen. Die Optimierungsfunktion kann die bereitgestellte Abfolge von Phasenspannungsvektoren abhängig von einem Motorstrom, Motordrehzahl und/oder einer wandlerinternen Spannung ermitteln. Dazu können aus den auszugebenden Phasenspannungsvektoren Phasendifferenz-Spannungsvektoren jeweils als Menge von Phasen-zu-Phasen-Spannungen ermittelt. Die Phasendifferenz-Spannungsvektoren geben jeweils die Spannungsdifferenzen zwischen den Wandlerausgängen zu einem bestimmten Zeitpunkt an. Diese Phasendifferenz-Spannungsvektoren können durch verschiedene Kombinationen der Anschlussspannungen realisiert werden und bilden somit eine Redundanz, da jedem der Phasendifferenz-Spannungsvektoren eine oder mehrere redundante Phasenspannungsvektoren zugeordnet sind. Somit werden mindestens einem der anfänglich durch die Abfolge der Phasenspannungsvektoren bereitgestellten Phasenspannungsvektoren eine Menge von einem oder mehreren redundanten Phasenspannungsvektoren bereitgestellt. Aus den sich daraus ergebenden redundanten Abfolgen von Phasenspannungsvektoren wird dann diejenige ausgewählt, durch die sich gemäß einem weiteren Optimierungsziel eine Optimierung eines Merkmals erreichen lässt.

Durch die Umwandlung der vorgegebenen Abfolge von Phasenspannungsvektoren in Phasendifferenz-Spannungsvektoren wird die darin enthaltene Gleichtaktspannungsvorgabe eliminiert, ohne den Spannungsbezug der Phasen zueinander aufzulösen. Dies ist möglich, da alle elektrischen Größen (abgesehen von der Gleichtakt-Spannung) der elektrischen Maschine von den Phasendifferenz-Spannungen abhängen, anstatt von den tatsächlich anliegenden absoluten Anschlussspannungen (Potenziale an den Wandlerausgängen), so dass die Anzahl der redundanten Schaltzustände, aus denen ausgewählt werden kann, im Vergleich zur eingangs beschrieben Einzelphasenredundanz deutlich erhöht ist.

Die Verwendung von Mehrfachphasenredundanzen anstelle oder zusätzlich zu den Einzelphasenredundanzen basiert auf der Beobachtung, dass der Motorstrom und insgesamt das Betriebsverhalten der elektrischen Maschine lediglich von den angelegten Phasendifferenzspannungen, d.h. der Differenzspannungen zwischen den Phasen, abhängt, so dass sich zum Bereitstellen eines bestimmten Spannungsvektors mit gleichen Phasendifferenz-Spannungen mehrere Phasenspannungskombinationen ergeben. Die Auswahl einer der Phasenspannungskombinationen aus den mehreren Phasenspannungskombinationen kann das Ziel des Einstellens von internen Potenialen und Spannungen an der Wandlerschaltung in verbesserter Weise durch die Nutzung einer größeren Zahl von Freiheitsgraden erreicht werden.

Weiterhin kann die Abfolge von Phasenspannungsvektoren gemäß dem optimierten Pulsmuster eine Anzahl N von aufeinander folgenden Phasenspannungsvektoren angeben, wobei das Ansteuern der Wandlerschaltung so erfolgt, dass eine Anzahl von aufeinander folgenden Phasenspannungsvektoren ausgegeben wird, die kleiner ist als die Anzahl N der Phasenspannungsvektoren der Abfolge von Phasenspannungsvektoren, bevor eine erneute Ermittlung einer Abfolge von Phasenspannungsvektoren gemäß den Schritten a) bis c) durchgeführt wird.

Gemäß einer Ausführungsform kann die Optimierungsfunktion als Optimierungsziel die Reduzierung des Oberschwingungsgehalts der Motorströme oder die Reduzierung der Motorströme bei vorgegebener Drehzahl haben.

Weiterhin kann das Ermitteln der Menge des einen oder der mehreren redundanten Phasenspannungsvektoren durchgeführt werden, indem dem mindestens einen Phasenspannungsvektor der Abfolge der Phasenspannungsvektoren diejenigen Phasenspannungsvektoren hinzugefügt werden, die sich durch schrittweises Erhöhen und/oder Erniedrigen aller Anschlussspannungen des mindestens einen Phasenspannungsvektors um jeweils ein Spannungsniveau ergeben, solange bis eine weitere Erhöhung oder Erniedrigung der Anschlussspannungen zu einem Überschreiten bzw. einem Unterschreiten des höchsten bzw. des niedrigsten von der Wandlerschaltung ausgebbaren Spannungspegels führt.

Gemäß einer Ausführungsform kann der interne Zustand einem Zwischenkreispotenzial eines Zwischenkreises der Wandlerschaltung entsprechen, wobei die weitere Optimierungsfunktion eines oder eine Kombination von mehreren der folgenden Optimierungsziele umfasst:

- das Zwischenkreispotenzial liegt innerhalb eines vorgegebenen Potenzialbereichs;
- die Schaltverluste beim Übergang zwischen den Phasenspannungsvektoren der Abfolge der Phasenspannungsvektoren ist minimal;
- die Schaltfrequenz beim Übergang zwischen den Phasenspannungsvektoren der Abfolge der Phasenspannungsvektoren ist minimal;
- die Gleichtaktspannung und/oder die Schwankung der Gleichtaktspannung sind minimal;
- die durchschnittlichen Abweichungen des internen Zustands von einem vorgegebenen Referenzzustand sind minimal.

Gemäß einem weiteren Aspekt ist eine Wandleranordnung vorgesehen. Die Wandleranordnung umfasst:

- eine Wandlerschaltung zum Bereitstellen von Phasenspannungen (Anschlussspannungen) an die elektrische Maschine,
- eine Steuereinheit, die ausgebildet ist, um

  - eine zeitlichen Abfolge von Phasenspannungsvektoren gemäß einer Optimierungsfunktion und abhängig von einem Betriebspunkt der elektrischen Maschine für einen momentanen Zeitpunkt bereitzustellen, wobei die Phasenspannungsvektoren der Abfolge jeweils für ein bestimmtes Zeitfenster die von der Wandlerschaltung bereitzustellenden Phasenspannungen für jede der Phasen angeben,
  - um für mindestens einen der Phasenspannungsvektoren der Abfolge der Phasenspannungsvektoren eine Menge von einem oder mehreren redundanten Phasenspannungsvektoren zu ermitteln, die die gleichen Spannungsdifferenzen zwischen den einzelnen Phasen aufweisen wie der mindestens eine Phasenspannungsvektor der Abfolge der Phasenspannungsvektoren, so dass sich mehrere redundante Abfolgen von Phasenspannungsvektoren ergeben, bei denen der mindestens eine der Phasenspannungsvektoren der Abfolge der Phasenspannungsvektoren durch einen der redundanten Phasenspannungsvektoren ersetzt ist;
  - um eine der redundanten Abfolgen von Phasenspannungsvektoren gemäß einer weiteren Optimierungsfunktion zum Optimieren des internen Zustands der Wandlerschaltung gemäß einem vorgegebenen Optimierungsziel auszuwählen;
  - um die Wandlerschaltung zur Ausgabe von mindestens des ersten Phasenspannungsvektors der ausgewählten Abfolge von Phasenspannungsvektoren anzusteuern.

Gemäß einem weiteren Aspekt ist ein Motorsystem vorgesehen, umfassend:

- eine mehrphasige elektrische Maschine;
- die obige Wandleranordnung,

wobei die zeitliche Abfolge von Phasenspannungsvektoren gemäß der Optimierungsfunktion abhängig von einem Betriebspunkt der elektrischen Maschine bereitgestellt wird.

Gemäß einem weiteren Aspekt ist ein Gleichrichter mit einer Wandleranordnung vorgesehen, wobei die Optimierungsfunktion so definiert ist, dass die Anschlussspannungen oder ein Ausgangsstrom konstant ist.

## Kurzbeschreibung der Zeichnungen

Bevorzugte Ausführungsformen werden nachfolgend anhand der beigefügten Zeichnungen näher erläutert. Es zeigen:

Figur 1 eine schematische Darstellung eines Motorsystems mit einer dreiphasigen fünfstufigen Wandlerschaltung;

Figur 2 ein Schaltbild einer Wandlereinheit zum Bereitstellen einer Phasenspannung;

Figur 3 eine Darstellung der einzelnen Phasenspannungen für jede der drei Phasen, die zu gewünschten Verläufen der Motorströme führen;

Figur 4 eine detailliertere Darstellung von Schalterereignissen innerhalb eines ausgewählten Zeitfensters der Verläufe der Phasenspannungen der Figur 3;

Figur 5 eine Darstellung eines Spannungszeiger-Hexagramms von Phasenspannungsvektoren der fünfstufigen Wandlerschaltung mit redundanten Phasenspannungsvektoren, die zu gleichen Phasen-zu-Phasen-Spannungen an der zu betreibenden Synchronmaschine führen;

Figur 6 eine Darstellung einer möglichen Abfolge der Phasenspannungsvektoren, vorgegeben durch das optimierte Pulsmuster, in dem Spannungszeiger-Hexagramm;

Figur 7 ein Flussdiagramm zur Darstellung eines Verfahrens zum Betreiben einer Wandlerschaltung; und

Figur 8 ein Beispiel der Verläufe der Zwischenkreisspannungen ohne und mit Einsatz der prädiktiven Steuerung.

## Wege zur Ausführung der Erfindung

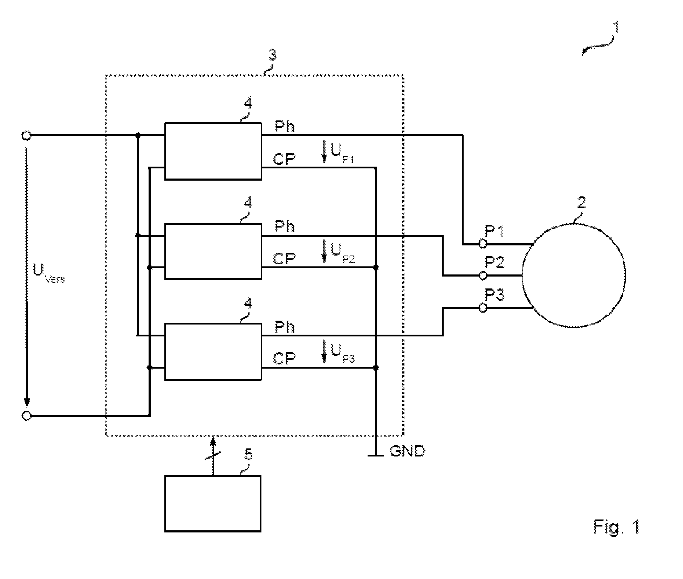

In Figur 1 ist ein Motorsystem 1 mit einem dreiphasigen Synchronmotor 2 und einer Wandlerschaltung 3 zum Betreiben des dreiphasigen Synchronmotors 2 dargestellt. Alternativ sind andere elektrische Maschinen, wie z.B. Asynchronmaschinen ebenfalls denkbar. Die Wandlerschaltung 3 umfasst für jede Phase eine Wandlereinheit 4, die in Form eines mehrstufigen Wandlers ausgebildet ist, d.h. jede Wandlereinheit 4 kann je nach Ansteuerung einen von mehreren Spannungspegeln als Phasenspannung ausgeben. Die Wandlereinheiten 4 sind im vorliegenden Ausführungsbeispiel vorgesehen, um die jeweilige Phasenspannung $U_{P1}$, $U_{P2}$, $U_{P3}$ jeweils zwischen einem Phasenanschluss Ph und einem Referenzanschluss CP auszugeben. Die jeweiligen Phasenanschlüsse Ph der Wandlereinheiten 4 werden an einen zugeordnete Phasenanschluss P1, P2, P3 des Synchronmotors 2 angeschlossen. Die Referenzanschlüsse CP der Wandlereinheiten 4 können miteinander und mit einem Bezugspotential, beispielsweise einem Massepotential GND, oder mit einem jeweiligen Bezugspotenzial verbunden sein.

Am Eingang der Wandlerschaltung 3 liegt eine Versorgungsspannung $U_{Vers}$ an. Diese Versorgungsspannung wird allen Wandlereinheiten 4 bereitgestellt. Die Wandlereinheiten 4 umfassen Halbleiterschalteilemente in Form von Thyristoren, IGBTs, IGCTs, Leistungs-MOSFETs und dergleichen und werden über eine Steuereinheit 5 angesteuert, so dass diese abhängig von der Ansteuerung geöffnet (nicht-leitend) oder geschlossen (leitend) werden. Die Leistungshalbleiterschalter jeder der Wandlereinheiten 4 werden gemäß einem Schaltmuster angesteuert, so dass die Wandlereinheiten 4 jeweils eine Phasenspannung $U_{P1}$, $U_{P2}$, $U_{P3}$ auszugeben.

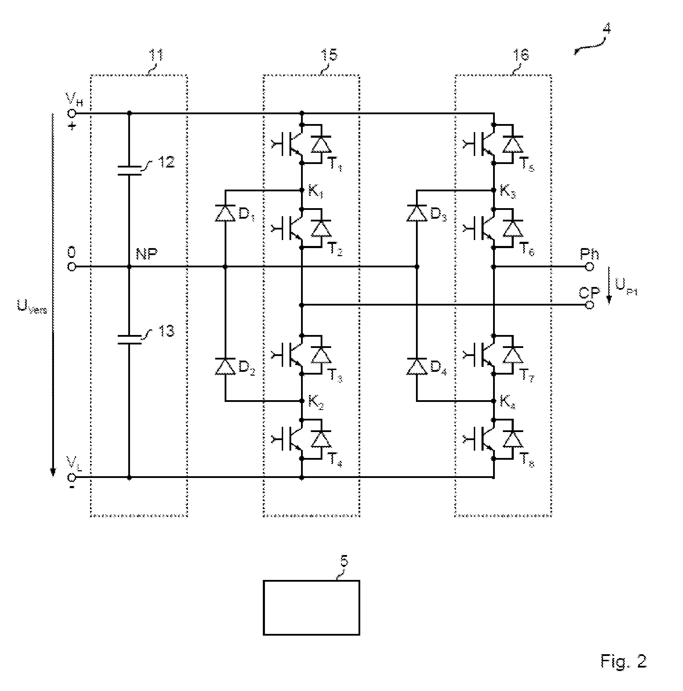

In Figur 2 ist ein Beispiel für eine Wandlereinheit 4 in Form einer H-Brückenschaltung dargestellt. Die H-Brückenschaltung weist einen Kondensatorzwischenkreis 11 auf, um einen neutralen Knoten NP zu definieren. Der Zwischenkreis 11 umfasst einen ersten Kondensator 12, der zwischen einem hohen Versorgungspotential $V_H$ und dem neutralen Knoten NP angeordnet ist. Zwischen dem neutralen Knoten NP und einem niedrigen Versorgungspotential $V_L$ ist ein zweiter Kondensator 13 angeordnet. Die Spannungsdifferenz zwischen dem hohen und dem niedrigen Versorgungspotential $V_H$, $V_L$ entspricht der Versorgungsspannung $U_{Vers}$.

Bei gleicher Auslegung der Kondensatoren 12, 13 stellt sich an dem neutralen Knoten NP ein Zwischenkreispotenzial ein, das mittig zwischen dem hohen und dem niedrigen Versorgungspotential $V_H$, $V_L$ liegt. Zwischen dem hohen Versorgungspotential $V_H$ und dem neutralen Knoten NP liegt somit eine halbe Versorgungsspannung $U_{Vers}$/2 und zwischen dem neutralen Knoten NP und dem niedrigen Versorgungspotential $V_L$ ebenfalls die halbe Versorgungspotential $U_{Vers}$/2 an.

Des Weiteren umfasst die Wandlereinheit 4 eine erste Inverterschaltung 15 und eine zweite Inverterschaltung 16, die im Wesentlichen identisch aufgebaut sind. Die Inverterschaltungen 15, 16 umfassen als Halbleiterschalteilemente vier in Reihe zueinander geschaltete Transistoren T1, T2, T3, T4; T5, T6, T7, T8, deren Steueranschlüsse jeweils über die Steuereinheit 5 mit entsprechenden Steuersignalen angesteuert werden. Die Steuereinheit 5 kann durch geeignete Steuersignale jeden der Leistungshalbleiterschalter T1 bis T8 durchschalten oder öffnen und somit einen Stromfluss zulassen oder unterbinden. Jeder der Transistoren T1 bis T8 ist mit einer in Sperrrichtung gepolten Freilaufdiode versehen.

Weiterhin ist ein erster Knoten $K_1$ zwischen dem ersten Leistungshalbleiterschalter T1 und dem zweiten Leistungshalbleiterschalter T2 der ersten Inverterschaltung 15 mit einem Anodenanschluss einer ersten Diode D1 verbunden. Ein Kathodenanschluss der ersten Diode D1 ist mit dem neutralen Knoten NP verbunden. Weiterhin ist ein zweiter Knoten $K_2$ zwischen dem dritten Leistungshalbleiterschalter T3 und dem vierten Leistungshalbleiterschalter T4 der ersten Inverterschaltung 15 mit einem Kathodenanschluss einer zweiten Diode D2 verbunden. Ein Anodenanschluss der zweiten Diode D2 ist mit dem neutralen Knoten NP verbunden.

Analog ist ein dritter Knoten $K_3$ zwischen dem fünften Leistungshalbleiterschalter T5 und dem sechsten Leistungshalbleiterschalter T6 der zweiten Inverterschaltung 16 mit einem Anodenanschluss einer dritten Diode D3 verbunden, deren Kathodenanschluss mit dem neutralen Knoten NP verbunden ist. Entsprechend ist ein Kathodenanschluss einer vierten Diode D4 mit einem vierten Knoten $K_4$ zwischen einem siebten Leistungshalbleiterschalter T7 und einem achten Leistungshalbleiterschalter T8 verbunden, wobei ein Anodenanschluss der vierten Diode D4 mit dem neutralen Knoten NP verbunden ist.

Ein Ausgangsknoten zwischen dem sechsten Leistungshalbleiterschalter T6 und dem siebten Leistungshalbleiterschalter T7 der zweiten Inverterschaltung 16 entspricht dem Phasenausgang Ph der Wandlereinheit 4 und ein Ausgangsknoten zwischen dem zweiten Leistungshalbleiterschalter T2 und dem dritten Leistungshalbleiterschalter T3 der ersten Inverterschaltung 15 einem Referenzanschluss CP der Wandlereinheit 4.

Bei der in Figur 2 gezeigten Wandlereinheit 4 handelt es sich um einen fünfstufigen Wandler, da als Phasenspannungen unter Zuhilfenahme des Potenzials des Zwischenkreises 11 die Spannungen $U_{Vers}$, $U_{Vers}$/2, 0, $-U_{Vers}$/2, $-U_{Vers}$ bereitgestellt werden können. Die ausgegebene Phasenspannung $U_P$ ergibt sich als Differenz zwischen dem Phasenanschluss Ph und dem Referenzanschluss CP. Diese Phasenspannungen werden nachfolgend als 2, 1, 0, -1, -2 (entsprechen $U_{Vers}$, $U_{Vers}$/2, 0, $-U_{Vers}$/2, $-U_{Vers}$) kodiert. Bei der Einzelphasenredundanz ist es nun möglich, Zwischenspannungen, d.h. die Spannungszustände 1, 0, -1 durch verschiedene Schaltzustände der Leistungshalbleiterschalter T1 bis T8 der Wandlereinheit 4 zu realisieren. Diese Schaltzustände können sich in einem Stromfluss (Ladungsfluss) zu oder von dem neutralen Knoten NP auswirken, wodurch dieser von seinem Neutralpunktpotential $V_{NP}$ wegbewegt wird.

Da das Neutralpunktpotential $V_{NP}$ in der Regel näherungsweise konstant , d.h. innerhalb vorgegebener Grenzen, bleiben soll und insbesondere einen gleichen bzw. vordefinierten Spannungsabstand von dem hohen und dem niedrigen Versorgungspotential $V_H$, $V_L$ aufweisen soll, sehen bisherige Verfahren vor, die Schaltzustände in einer Wandlereinheit 4 zum Bereitstellen der Spannungszustände 1, 0, -1 als auszugebende Phasenspannung $U_{P1}$, $U_{P2}$, $U_{P3}$ so auszuwählen, dass ein Ladungsausgleich zwischen auf den neutralen Knoten NP fließenden und von dem neutralen Knoten NP fließenden Strömen geschaffen wird. Je nach Ansteuerung des dreiphasigen Synchronmotors kann es jedoch bei bestimmten Betriebszuständen schwierig sein, das Neutralpunktpotential auf einem näherungsweise konstanten Pegel zu halten.

Die Steuereinheit 5 steuert die Leistungshalbleiterschalter T1 bis T8 gemäß einem ermittelten Spannungsvektor an, der unter Berücksichtigung der Redundanzen zu einem geeigneten Schaltmuster für die Ansteuerung der Leistungshalbleiterschalter umgesetzt wird. Abhängig von Betriebszuständen (Drehzahl, Last, Motorstrom, wandlerinterne Spannung usw.) wird gemäß einer Optimierungsfunktion eine Abfolge von innerhalb eines definierten Zeitfensters (beginnend mit dem momentanen Zeitpunkt oder mit einem künftigen Zeitpunkt) anzulegenden Phasenspannungsvektoren als optimales Pulsmuster bestimmt.

Das optimierte Pulsmuster wird gemäß einem bekannten Verfahren ermittelt, um ein vorgegebenes Optimierungsziel zu erreichen. Beispiele für derartige Optimierungsziele sind die Eliminierung von bestimmten Oberschwingungen oder die Minimierung der Verzerrung des Motorstroms. Mit anderen Worten dient das optimierte Pulsmuster dazu, Verläufe der Motorströme zu modellieren, die dem Optimierungsziel entsprechen und entsprechende Phasenspannungen zu ermitteln, mit denen sich der entsprechende Motorstrom (häufig unter der Annahme einer konstanten Betriebsbedingung) erreichen lässt.

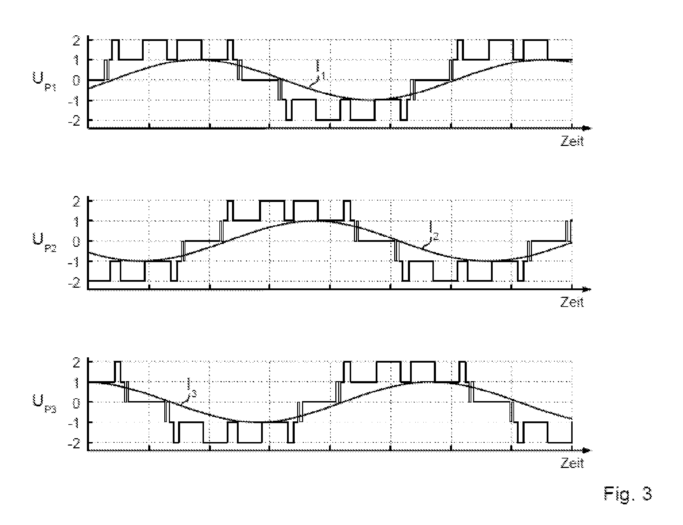

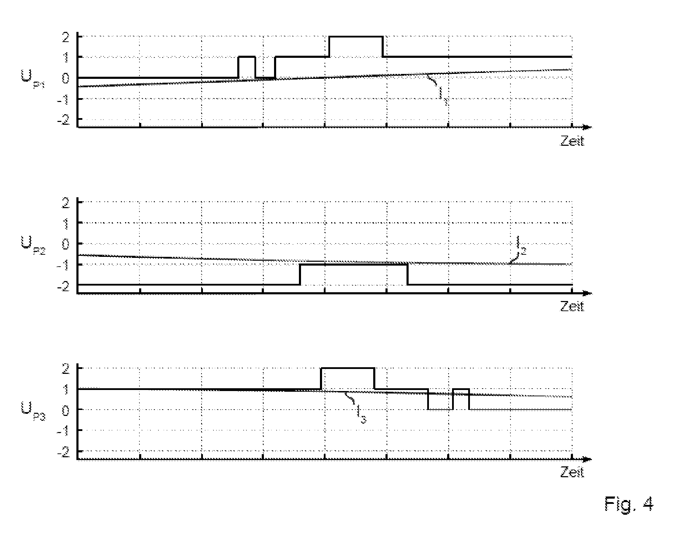

Zum Erreichen von vordefinierten Phasenspannungen zum Ansteuern des Synchronmotors 2, wie sie beispielsweise in Figur 3 für drei Phasen dargestellt sind, werden entsprechende Phasenspannungen $U_{P1}$, $U_{P2}$, $U_{P3}$ ausgegeben, um gewünschte Verläufe der Motorströme $I_1$, $I_2$, $I_3$ zu erhalten. In Figur 4 ist ein Ausschnitt aus dem Diagramm der Figur 3 dargestellt, aus dem deutlicher die einzelnen Phasenspannungen der Phasenspannungsvektoren ersichtlich sind.

Es hat sich herausgestellt, dass es für den Betrieb der elektrischen Maschine nicht so sehr auf die Pegel der Phasenspannungen ankommt, die durch die vorgegebenen Phasenspannungsvektoren definiert werden, sondern mehr auf die Spannungsdifferenzen zwischen den einzelnen Phasenanschlüssen P1, P2, P3 des Synchronmotors 2. Dadurch können weitere Freiheitsgrade für Optimierungen geschaffen werden, da es häufig möglich ist die gleichen Spannungsdifferenzvektoren mit verschiedenen Phasenspannungskombinationen zu realisieren. Damit ist es möglich, weitere redundante Zustände zu definieren, die man als Mehrphasenredundanzen bezeichnen kann. Es wird also jedem der aufeinanderfolgenden Phasenspannungsvektoren aus dem ermittelten optimierten Pulsmuster eine oder mehrere Alternativen für Phasendifferenz-Spannungsvektoren, die die Phasen-zu-Phasen-Spannungen zwischen den Phasen angeben, zugeordnet.

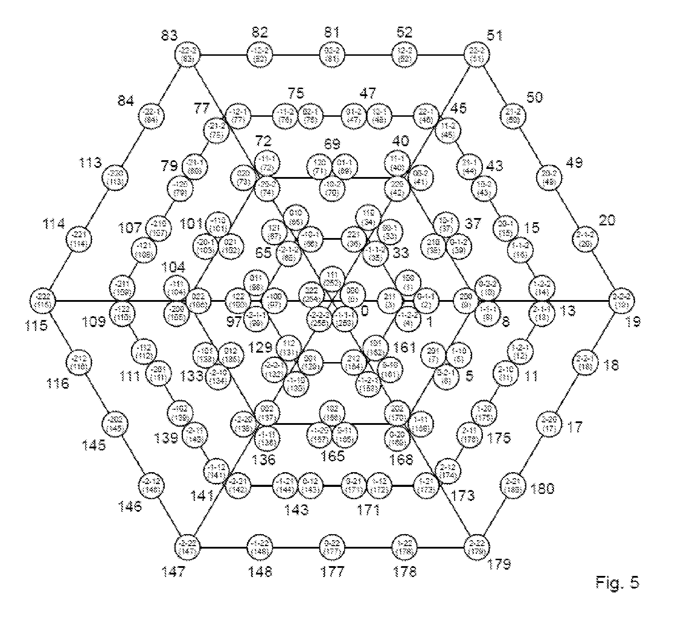

Figur 5 zeigt ein Spannungszeiger-Hexagramm mit den möglichen Phasendifferenz-Spannungsvektoren zum Ansteuern des Synchronmotors 2. Für jeden möglichen Phasendifferenz-Spannungsvektor sind eine oder mehrere Alternativen für Kombinationen von anzulegenden Phasenspannungen als für den betreffenden Phasendifferenz-Spannungsvektor relevante redundante Schaltzustände der Wandlerschaltung 4 angegeben. So kann beispielsweise ein durch das optimierte Pulsmuster angegebener Phasenspannungsvektor von 201 eine Phasendifferenz zwischen der Phase P1 und der Phase P2 von 2, zwischen der Phase P1 und P3 von 1 und zwischen der Phase P2 und P3 von -1 angibt, durch die Phasenspannungsvektoren $U_{P1}$=2, $U_{P2}$=0, $U_{P3}$=1 (201) oder $U_{P1}$=1, $U_{P2}$=-1, $U_{P3}$=0 (1 -1 0) oder $U_{P1}$=0, $U_{P2}$=-2, $U_{P3}$=-1 (0 -2 -1) dargestellt werden, da jeder dieser Phasenspannungsvektoren die gleiche Phasendifferenz-Spannungen zwischen den Phasen aufweist. Mit anderen Worten wird der Redundanz (Einzelphasenredundanz) zur Ausgabe einer Phasenspannung am Ausgang jeder der Wandlereinheiten 4 eine weitere Redundanz hinzugefügt, bei der zur Ausgabe eines äquivalenten Phasenspannungsvektors die Phasenspannung abhängig von den Phasenspannungen der übrigen Wandlereinheiten 4 variieren kann. Somit wird der Freiheitsgrad bei der Auswahl von Phasenspannungsvektoren zur Ansteuerung des Synchronmotors 2 deutlich erhöht.

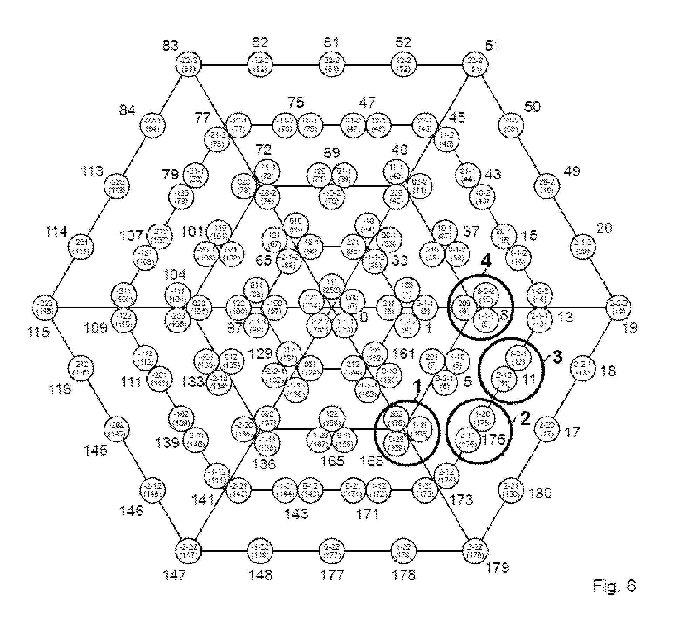

In Figur 6 ist ein Hexagramm zur Darstellung einer möglichen Abfolge von Phasenspannungsvektoren für das optimierte Pulsmuster dargestellt. Jeder der dick umrandeten Kreise stellt einen durch das Pulsmuster vorgegebenen Schaltzustand dar. Man erkennt, dass die Schaltzustände Z1 bis Z4 jeweils mehrere redundante Phasenspannungsvektoren umfassen, die zum Anlegen der Abfolge von Schaltzuständen beliebig miteinander kombiniert werden können, ohne dass sich dabei die jeweiligen Phasendifferenz-Spannungen zwischen den Phasen ändern.

Man erkennt, dass bei den Schaltzuständen Z1 und Z4 jeweils drei verschiedene Phasenspannungsvektoren, die den geforderten Phasendifferenz-Spannungsvektor bereitstellen können, während die Schaltzustände Z2 und Z3 durch jeweils zwei Phasendifferenz-Spannungsvektoren bereitgestellt werden können. Man erkennt, dass 3 x 2 x 2 x 3 = 36 Kombinationen von Phasenspannungsvektoren möglich sind, um die durch das optimierte Pulsmuster geforderte Abfolge von Spannungszeigern an dem Synchronmotor 2 bereitzustellen. Jeder der einzelnen Schaltzustände führt zur Ausgabe einer bestimmten Phasenspannung am Ausgang jeder Wandlereinheit 4. Es wird angemerkt, dass die Realisierung jedes Schaltzustands durch mehrere Phasenspannungsvektoren die Anwendung der Einzelphasenredundanz nicht ausschließt. Dadurch kann sich die Anzahl der möglichen redundanten Phasenspannungsvektoren weiter erhöhen.

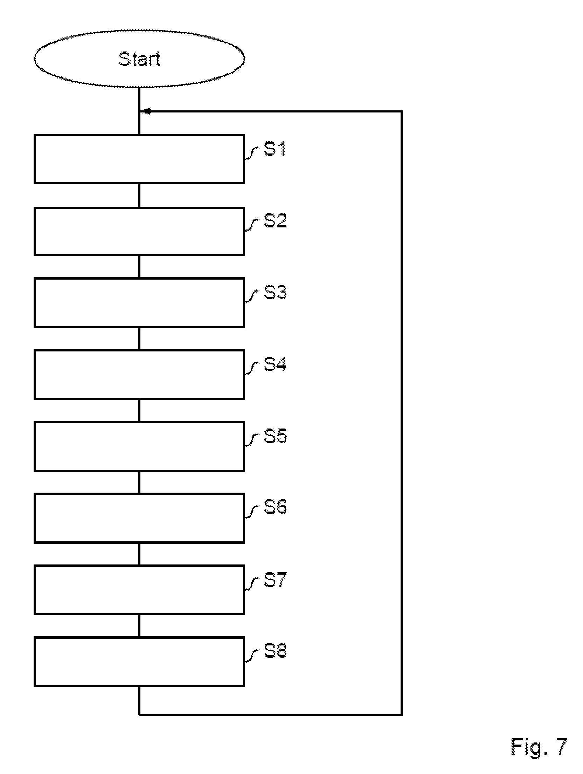

In Figur 7 ist ein Flussdiagramm zur Veranschaulichung eines Verfahrens zum Betreiben der Wandlerschaltung dargestellt. In einem Schritt S1 werden gemäß einer Betriebsfunktion, die numerisch oder als eine Lookup-Tabelle beschrieben sein kann, die optimierten Pulsmuster ausgelesen, die in einem bestimmten Zeitfenster angelegt werden sollen. Die Betriebsfunktion ermittelt die Abfolge der Phasenspannungsvektoren gemäß dem optimierten Pulsmuster abhängig von Betriebszustandsgrößen, wie Drehzahl und Last sowie Motorstrom und dergleichen.

Das optimierte Pulsmuster wird gemäß einem bekannten Verfahren ermittelt und wird gemäß dem Erreichen eines vorgegebenen Optimierungsziels bestimmt. Beispiele für derartige Optimierungsziele sind die Eliminierung von bestimmten Oberschwingungen oder die Minimierung des Motorstroms. Jedes der Optimierungsziele lässt sich betriebspunktabhängig in einen Sollverlauf der Motorströme umsetzen. Es wird dann mit Hilfe einer an sich bekannten Modellfunktion die Abfolge der Phasenspannungsvektoren und deren jeweilige Zeitdauer innerhalb des definierten Zeitfensters modelliert, mit der der Sollverlauf der Motorströme möglichst genau angenähert werden kann. Im Folgenden soll auf die Ermittlung der optimierten Schaltmuster nicht näher eingegangen werden. Es ist lediglich wesentlich, dass die optimierten Pulsmuster im Vorfeld berechnet werden und mehrere innerhalb eines vorgegebenen Zeitfensters (beginnend mit dem momentanen Zeitpunkt oder einem zukünftigen Zeitpunkt) anzulegende Phasenspannungsvektoren des optimierten Pulsmusters festgelegt werden.

In Schritt S2 werden aus den durch das optimierte Pulsmuster vorgegebenen Phasenspannungsvektoren, die an die Motoranschlüsse angelegt werden sollen, jeweils der Phasendifferenz-Spannungsvektor ermittelt, insbesondere während der nächsten N Schaltvorgänge oder während eines Zeitfensters vorgegebener Dauer. Dazu werden bei oben dargestelltem Ausführungsbeispiel die Spannungsdifferenzen zwischen der durch das optimierte Pulsmuster vorgegebenen Phasenspannung der ersten Phase zu den jeweils durch das optimierte Pulsmuster vorgegebenen Phasenspannungen der zweiten und dritten Phase sowie die Spannungsdifferenz zwischen der durch das optimierte Pulsmuster vorgegebenen Phasenspannung der zweiten Phase und der dritten Phase errechnet. Diese Phasendifferenz-Spannungen definieren entsprechende Phasendifferenz-Spannungsvektoren.

In Schritt S3 wird für jeden Phasendifferenz-Spannungsvektor die Menge an redundanten Phasenspannungsvektoren ermittelt, die zu gleichen, durch den jeweiligen Phasenspannungsvektor definierten Phasendifferenzspannungen zwischen den einzelnen Phasen führen. Die Menge wird ermittelt, indem dem betrachteten Phasenspannungsvektor weitere redundante Phasenspannungsvektoren hinzugefügt werden. Die weiteren redundanten Phasenspannungsvektoren werden ermittelt, indem schrittweise alle Phasenspannungen des betrachteten Phasenspannungsvektors um jeweils ein Spannungsniveau erhöht und/oder erniedrigt werden und der sich daraus ergebende Phasenspannungsvektor als redundanter Phasenspannungsvektor der Menge hinzugefügt wird, solange bis eine weitere Erhöhung oder Erniedrigung der betrachteten Phasenspannungen des Phasenspannungsvektors zu einem Überschreiten bzw. einem Unterschreiten des höchsten bzw. des niedrigsten von der Wandlerschaltung ausgebbaren Spannungspegels führt. Daraus ergibt sich eine Menge an redundanten Schaltzustandskombinationen als Produkt der Anzahlen der redundanten Phasenspannungsvektoren zu jedem durch das optimierte Pulsmuster vorgegebenen Schaltzustand. Optional können ein oder mehrere weitere redundante Phasenspannungsvektoren hinzugefügt werden, die sich als Einzelphasenredundanz aus jedem zuvor ermittelten redundanten Phasenspannungsvektor ergeben.

Nun wird in Schritt S4 für jede der sich aus Schritt S3 ergebenden Schaltzustandskombinationen über die N Schaltvorgänge die Auswirkung auf eine oder mehrere interne elektrische Größen der Wandlerschaltung 3 ermittelt. Im vorliegenden Ausführungsbeispiel werden die Auswirkungen jedes der Schaltzustandskombinationen auf die Zwischenkreispotenziale an den neutralen Knoten NP für jede der Wandlereinheiten 4, d.h. für jede Phase, gemäß dem Integral

$$U = \frac{1}{C} \int_{T0}^{T1} i(t)\,dt$$

ermittelt. Dabei entsprechen C der wirksamen Kapazität der Kondensatoren des Zwischenkreises die die Zwischenkreispotenzial bereitstellen und i dem (modellierten) Motorstrom der entsprechenden Phase. Der Motorstrom wird berechnet unter Zuhilfenahme eines Modells des Synchronmotors 2. Alternativ kann unter der Annahme, dass der Motorstrom im Wesentlichen nur durch die Grundschwingung bestimmt wird, dieser mit i(t) = A*sin (w*t + p) berechnet werden. Aus den Anfangsbedingungen können A und p berechnet und die obige Integration durchgeführt werden.

T0 entspricht dem Anfangszeitpunkt der durch das optimierte Pulsmuster angegebenen Abfolge von Phasenspannungsvektoren und T1 dem Endzeitpunkt nach dem Anlegen der vorbestimmten Anzahl der Phasenspannungsvektoren oder nach Ablauf der vorbestimmten Zeitperiode. Zur vereinfachten Integration kann das Zeitintervall [T0,T1] in Teilintervalle, die jeweils der Zeitdauer entsprechen, während der ein bestimmter Phasenspannungsvektor angelegt ist, unterteilt werden. Die Integrationen können dann separat durchgeführt und anschließend die Integrationsteilergebnisse addiert werden.

In Schritt S5 werden aus allen Schaltfolgen diejenigen ausgewählt, bei denen das modellierte Zwischenkreispotenzial am neutralen Knoten NP innerhalb vorgegebener Grenzen bleibt.

In Schritt S6 wird für die in Schritt S5 ausgewählten Abfolgen der Phasenspannungsvektoren eine Schätzung der Schaltverluste errechnet und in Schritt S7 diejenige Schaltfolge ausgewählt, die die niedrigsten Schaltverluste bewirkt. Als alternatives Optimierungskriterium kommt in Schritt S6 auch die Schaltfrequenz oder die Gleichtaktspannung in Betracht, die optimiert werden kann, indem die für den Betrieb Vorteilhafteste in Schritt S7 ausgewählt wird. Bei dem Auswahlprozess des Schritts S7 kann es unter Umständen dazu kommen, dass sich mehrere Schaltfolgen als optimal herausstellen. In diesem Fall kann die Abfolge der Phasenspannungsvektoren so ausgewählt werden, dass die Summe der Abweichungen der internen Größen der Wandlereinheiten 4 von ihren Bezugsgrößen minimiert wird.

In Schritt S8 wird der erste Phasenspannungsvektor an die Motoranschlüsse angelegt, der sich aus dem Schritt S7 ergibt. Bevor der nächste Phasenspannungsvektor der in Schritt S7 ausgewählten Schaltfolge angelegt wird, wird zunächst die Berechnung der Schritte S1 bis S7 erneut durchgeführt, um erneut für ein erneut bestimmtes optimiertes Pulsmuster, das sich aufgrund äußerer Einflüsse, beispielsweise Änderungen von Drehzahl, Last oder Motorströmen, von dem zuvor berechneten abweichen kann, erneut die optimale Abfolge der Phasenspannungsvektor gemäß der Schritte S1 bis S7 auszuwählen. Durch diese Vorgehensweise können Situationen vermieden werden, bei denen die zuvor angelegten Phasenspannungsvektoren zu einem Motorzustand geführt haben, von dem ausgehend sich das Optimierungsziel der weiteren Optimierungsfunktion nicht mehr erreichen lässt. Gemäß einer alternativen Ausführungsform können aus der in Schritt S7 bestimmten Abfolge von Phasenspannungsvektoren mehrere der Phasenspannungsvektoren angelegt werden, bevor eine erneute Ermittlung der optimalen Abfolge gemäß den Schritten S1 bis S7 durchgeführt wird.

Im Ergebnis können mit dem obigen Verfahren interne, von Schaltzuständen abhängige Potenziale, wie z.B. die Zwischenkreispotenziale des neutralen Knotens NP, die durch Kapazitäten bereitgestellt werden, eingestellt werden, indem die Menge an verfügbaren Phasenspannungsvektoren durch weitere redundante Phasenspannungsvektoren (Mehrphasenredundanzen) erweitert und aus der erweiterten Menge an Phasenspannungsvektoren in geeigneter Weise ausgewählt werden. Dies kann je nach Optimierungsziel zu einer erheblichen Reduktion der Schaltverluste führen, da keine zusätzlichen Schaltvorgänge eingefügt werden müssen, um das Optimierungsziel (Reduzierung der Schwankung des Zwischenkreispotenzials usw.) zu erreichen.

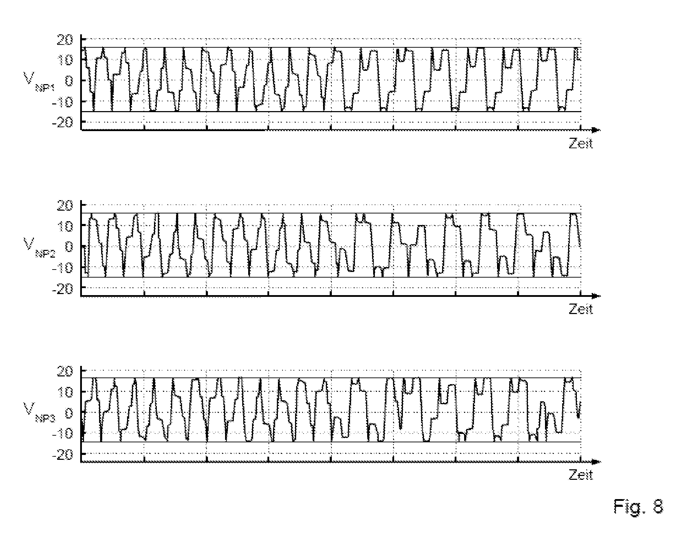

Dies ist beispielsweise in dem Signal-Zeit-Diagramm der Fig. 8 bereits durch Ansehen der Signalverläufe der Zwischenkreispotenziale der drei Wandlereinheiten 4 ohne Anwenden des obigen Verfahrens und nach dem Anwenden des obigen Verfahrens erkennbar. Das obige Verfahren kann bei allen mehrphasigen Wandlerschaltungen angewandt werden. Insbesondere eignet sich das obige Verfahren für mehr als dreistufige, insbesondere fünfstufige Wandlerschaltungen.

Das obige Verfahren zum Betreiben der Wandlerschaltung ist vorteilhaft, da das Spannungsmuster zum Betreiben des Motors nicht verändert wird, wodurch keine Effekte auf den Oberschwingungsgehalt der Motorströme auftreten. Das obige Verfahren ist prädiktiv und berücksichtigt daher die Schaltbeschränkungen der Wandlerschaltung und dient zum Auswählen einer geeigneten Abfolge von Schaltzuständen, um nicht-mögliche bzw. nichtzulässige Übergänge zu vermeiden. Das Verfahren ist des Weiteren sehr flexibel und kann zum Erzielen verschiedener Optimierungsziele verwendet werden, wie beispielsweise die Minimierung von Schaltverlusten, der Schaltfrequenz, der Gleichtaktspannung und dergleichen. Insbesondere bei der Minimierung der Schaltfrequenz und der Schaltverluste vermeidet das Verfahren das Einfügen von zusätzlichen Schaltvorgängen. Insbesondere können gleichzeitig zwei Optimierungsziele verfolgt werden. Beispielsweise kann als ein erstes Optimierungsziel die Minimierung der Schaltfrequenz und als zweites Optimierungsziel die die Minimierung der Gleichtaktspannung erreicht werden.

Es kann weiterhin vorgesehen sein, dass mehrere weitere Optimierungsfunktionen angewendet werden. So können sich aus einer ersten der weiteren Optimierungsfunktionen mehrere Phasenspannungsvektoren ergeben, die ein entsprechendes erstes Optimierungsziel erfüllen. Aus diesen mehreren Phasenspannungsvektoren kann dann der Phasenspannungsvektor ausgewählt werden, der ein zweites Optimierungsziel einer zweiten der mehreren weiteren Optimierungsfunktionen erfüllt.

Die Wandleranordnung aus der Wandlerschaltung 3 und der Steuereinheit 5 lässt sich darüber hinaus auch als Gleichrichter betreiben. Die Phasenausgänge sollten in diesem Fall mit Phasenspannungsvektoren so angesteuert werden, dass diese eine vorgegebene konstante Spannung, d.h. die Spannungsdifferenz zwischen den Anschlussspannungen sind konstant, bzw. einen vorgegebenen konstanten Strom ausgeben.

**Bezugszeichenliste**

| | |
|---|---|
| 1 | Motorsystem |
| 2 | Synchronmotor |
| 3 | Wandlerschaltung |
| 4 | Wandlereinheit |

| | |
|---|---|
| 5 | Steuereinheit |
| 11 | Zwischenkreis |
| 12 | erster Kondensator |
| 13 | zweiter Kondensator |
| 15 | erste Inverterschaltung |
| 16 | zweite Inverterschaltung |
| T1-T8 | Leistungshalbleiterschalter |
| D1-D4 | Dioden |
| $U_{P1}$, $U_{P2}$, $U_{P3}$ | Phasenspannungen |
| Ph | Phasenanschlüsse |
| CP | Referenzanschlüsse |
| $U_{Vers}$ | Versorgungsspannung |
| $V_H$ | hohes Versorgungspotential |
| $V_L$ | niedriges Versorgungspotential |

**Patentansprüche**

1. Verfahren zum Betreiben einer mehrphasigen, mehrstufigen Wandlerschaltung (3), insbesondere zum Betreiben einer mehrphasigen elektrischen Maschine (2) oder eines Gleichrichters, wobei die Wandlerschaltung (3) abhängig von internen Schaltzuständen mehrere Anschlussspannungen ($U_{P1}$, $U_{P2}$, $U_{P3}$) bereitstellt und ausgebildet ist, dass ein interner Zustand der Wandlerschaltung von einem Schaltzustand abhängt, mit folgenden Schritten:

   a) Bereitstellen einer zeitlichen Abfolge von Phasenspannungsvektoren gemäß einer vorgegebenen Optimierungsfunktion für einen momentanen Zeitpunkt, wobei die Phasenspannungsvektoren der Abfolge jeweils für ein bestimmtes Zeitfenster die mehreren von der Wandlerschaltung bereitzustellenden Anschlussspannungen ($U_{P1}$, $U_{P2}$, $U_{P3}$) angeben,
   b) Ermitteln für mindestens einen der Phasenspannungsvektoren der Abfolge der Phasenspannungsvektoren eine Menge von einem oder mehreren redundanten Phasenspannungsvektoren, die die gleichen Spannungsdifferenzen zwischen den einzelnen Phasen aufweisen wie der mindestens eine Phasenspannungsvektor der Abfolge der Phasenspannungsvektoren, so dass sich mehrere redundante Abfolgen von Phasenspannungsvektoren ergeben, bei denen der mindestens eine der Phasenspannungsvektoren der Abfolge der Phasenspannungsvektoren durch einen der redundanten Phasenspannungsvektoren ersetzt ist;
   c) Auswählen von einer der redundanten Abfolgen von Phasenspannungsvektoren gemäß einer weiteren vorgegebenen Optimierungsfunktion zum Optimieren des internen Zustands der Wandlerschaltung gemäß einem vorgegebenen Optimierungsziel;
   d) Bereitstellen von mindestens des ersten Phasenspannungsvektors der ausgewählten Abfolge von Phasenspannungsvektoren zum Ansteuern der Wandlerschaltung (3).

2. Verfahren nach Anspruch 1, wobei die Abfolge von Phasenspannungsvektoren gemäß dem optimierten Pulsmuster eine Anzahl N von aufeinander folgenden Phasenspannungsvektoren angibt, wobei das Ansteuern der Wandlerschaltung (3) so erfolgt, dass eine Anzahl von aufeinander folgenden Phasenspannungsvektoren ausgegeben wird, die kleiner ist als die Anzahl N der Phasenspannungsvektoren der Abfolge von Phasenspannungsvektoren, bevor eine erneute Ermittlung einer Abfolge von Phasenspannungsvektoren gemäß den Schritten a) bis c) durchgeführt wird.

3. Verfahren nach einem der Ansprüche 1 und 2, wobei das Verfahren zum Betreiben einer elektrischen Maschine (2) vorgesehen ist, wobei die Optimierungsfunktion die Reduzierung des Oberschwingungsgehalts eines Stromes durch die elektrische Maschine (2) oder die Reduzierung des Stromes durch die elektrische Maschine (2) bei einer vorgegebenen Drehzahl als Optimierungsziel hat.

4. Verfahren nach einem der Ansprüche 1 bis 3, wobei das Ermitteln der Menge des einen oder der mehreren redundanten Phasenspannungsvektoren durchgeführt wird, indem dem mindestens einen Phasenspannungsvektor der Abfolge der Phasenspannungsvektoren diejenigen Phasenspannungsvektoren hinzugefügt werden, die sich durch schrittweises Erhöhen und/oder Erniedrigen aller Anschlussspannungen des mindestens einen Phasenspannungsvektors um jeweils ein Spannungsniveau ergeben, solange bis eine weitere Erhöhung oder Erniedrigung der Anschlussspannungen zu einem Überschreiten bzw. einem Unterschreiten des höchsten bzw. des niedrigsten von der Wandlerschaltung ausgebbaren Spannungspegels führt.

5. Verfahren nach einem der Ansprüche 1 bis 4, wobei der interne Zustand einem Zwischenkreispotenzial entspricht, wobei die weitere Optimierungsfunktion eines oder eine Kombination von mehreren der folgenden Optimierungsziele umfasst:

- die Zwischenkreispotenzial liegt innerhalb eines vorgegebenen Potenzialbereichs;
- die Schaltverluste und/oder die Schaltfrequenz beim Übergang zwischen den Phasenspannungsvektoren der Abfolge der Phasenspannungsvektoren sind minimal;
- die Gleichtaktspannung und/oder die Schwankung der Gleichtaktspannung sind minimal;
- die durchschnittlichen Abweichungen des internen Zustands von einem vorgegebenen Referenzzustand sind minimal.

6. Wandleranordnung umfassend:

- eine Wandlerschaltung (3) zum Bereitstellen von Anschlussspannungen ($U_{P1}$, $U_{P2}$, $U_{P3}$),
- eine Steuereinheit (5), die ausgebildet ist, um

- eine zeitlichen Abfolge von Phasenspannungsvektoren gemäß einer Optimierungsfunktion und abhängig von einem Betriebspunkt der elektrischen Maschine für einen momentanen Zeitpunkt bereitzustellen, wobei die Phasenspannungsvektoren der Abfolge jeweils für ein bestimmtes Zeitfenster die von der Wandlerschaltung (3) bereitzustellenden Anschlussspannungen angeben,
- um für mindestens einen der Phasenspannungsvektoren der Abfolge der Phasenspannungsvektoren eine Menge von einem oder mehreren redundanten Phasenspannungsvektoren zu ermitteln, die die gleichen Spannungsdifferenzen zwischen den einzelnen Phasen aufweisen wie der mindestens eine Phasenspannungsvektor der Abfolge der Phasenspannungsvektoren, so dass sich mehrere redundante Abfolgen von Phasenspannungsvektoren ergeben, bei denen der mindestens eine der Phasenspannungsvektoren der Abfolge der Phasenspannungsvektoren durch einen der redundanten Phasenspannungsvektoren ersetzt ist;
- um eine der redundanten Abfolgen von Phasenspannungsvektoren gemäß einer weiteren Optimierungsfunktion zum Optimieren des internen Zustands der Wandlerschaltung gemäß einem vorgegebenen Optimierungsziel auszuwählen;
- um die Wandlerschaltung (3) zur Ausgabe von mindestens des ersten Phasenspannungsvektors der ausgewählten Abfolge von Phasenspannungsvektoren anzusteuern.

7. Motorsystem (1) umfassend:

- eine mehrphasige elektrische Maschine (2);
- eine Wandleranordnung (3) nach Anspruch 6,

wobei die zeitliche Abfolge von Phasenspannungsvektoren gemäß der Optimierungsfunktion abhängig von einem Betriebspunkt der elektrischen Maschine (2) bereitgestellt wird.

8. Gleichrichter mit einer Wandleranordnung (3) nach Anspruch 6, wobei die Optimierungsfunktion so definiert ist, dass die Anschlussspannungen oder ein Ausgangsstrom konstant ist.

Fig. 1

Fig. 2

Fig. 3

Fig. 4

Fig. 5

Fig. 6

Fig. 7

Fig. 8

Europäisches
Patentamt

European
Patent Office

Office européen
des brevets

**EUROPÄISCHER RECHERCHENBERICHT**

**Nummer der Anmeldung**

EP 10 15 1549

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GEYER, T.; PAPAFOTIOU, G.;: "Model Predictive Direct Torque Control of a variable Speed Drive with a Five-Level Inverter" CONFERENCE PROCEEDINGS IECON '09 - 35TH ANNUAL CONFERENCE OF IEEE INDUSTRIAL ELECTRONICS, 2009, 3. November 2009 (2009-11-03), - 5. November 2009 (2009-11-05) Seiten 1203-1208, XP002596524 ISSN: 1553-572X DOI: 10.1109/IECON.2009.5414663 * Zusammenfassung; Abbildungen 1-4 * * Kapitel II A., B. * * Kapitel III * * Kapitel IV A., D. * * Tabelle III * ----- | 1-8 | INV. H02M7/487 ADD. H02M1/14 |
| X | GEYER, T.; PAPAFOTIOU, G.; MORARI, M.;: "Model Predictive Direct Torque Control - Part I: Concept, Algorithm and Analysis" IEEE TRANSACTIONS ON INDUSTRIAL ELECTRONICS, Bd. 56, Nr. 6, 5. Juni 2009 (2009-06-05), Seiten 1894-1905, XP002596525 ISSN: 0278-0046 DOI: 10.1109/TIE.2008.2007030 * Zusammenfassung; Abbildungen 1, 3 * * Kapitel V, V A. * * Seite 1894, rechte Spalte, Absatz 2 * ----- -/-- | 1,2,5-8 | RECHERCHIERTE SACHGEBIETE (IPC) H02M |

Der vorliegende Recherchenbericht wurde für alle Patentansprüche erstellt

| Recherchenort | Abschlußdatum der Recherche | Prüfer |
|---|---|---|
| Den Haag | 13. August 2010 | Kail, Maximilian |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

.................................................................................................................
& : Mitglied der gleichen Patentfamilie, übereinstimmendes
   Dokument

EPO FORM 1503 03.82 (P04C03)

Europäisches
Patentamt

European
Patent Office

Office européen
des brevets

**EUROPÄISCHER RECHERCHENBERICHT**

**Nummer der Anmeldung**

EP 10 15 1549

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | MARIO MARCHESONI ET AL: "Diode-Clamped Multilevel Converters: A Practicable Way to Balance DC-Link Voltages" IEEE TRANSACTIONS ON INDUSTRIAL ELECTRONICS, IEEE SERVICE CENTER, PISCATAWAY, NJ, USA, Bd. 49, Nr. 4, 1. August 2002 (2002-08-01), XP011073743 ISSN: 0278-0046 | 1,5-8 | |
| A | * Abbildungen 1, 4 * <br> * Kapitel V, erste Seite * <br> * Kapitel VI, VII * <br> ----- | 4 | |
| A | EP 2 110 939 A1 (ABB RESEARCH LTD [CH]) 21. Oktober 2009 (2009-10-21) * Absätze [0017], [0018], [0050], [0 51]; Abbildung 1 * <br> ----- | 4 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 13. August 2010 | Kail, Maximilian |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

....................................................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 10 15 1549

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-08-2010

| Im Recherchenbericht angeführtes Patentdokument | Datum der Veröffentlichung | Mitglied(er) der Patentfamilie | Datum der Veröffentlichung |
|---|---|---|---|
| EP 2110939 A1 | 21-10-2009 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **J. POU ; R. PINANDO et al.** Evaluation of the Low-Frequency Neutral-Point Voltage Oscillations in the Three-Level Inverter. *IEEE Transactions on Industrial Electronics,* Dezember 2000, vol. 52 (6), 1582-1588
- **J. STEINKE.** Switching Frequency Optimal PWM Control of a Three-Level Inverter. *IEEE Transactions on Power Electronics,* Januar 1992, vol. 7 (3), 487-496
- **F. FANG.** Multilevel PWM VSIs - Coordinated Control of Regenerative Three-Level Neutral Point Clamped Pulsewidth-Modulated Voltage Source Inverters. *IEEE Industry Applications Magazine,* Juli 2004, 51-58